# EUROPÄISCHE PATENTSCHRIFT

(11) **EP 2 652 325 B1**
(45) Veröffentlichungstag und Bekanntmachung des Hinweises auf die Patenterteilung: **19.12.2018**
(21) Anmeldenummer: 11775772.4
(22) Anmeldetag: 25.10.2011
(51) Int. Cl.: F04B 1/04, F04B 11/00, F04B 39/12, F04B 53/00, F04B 53/16, B60T 8/40

(54) **KOLBENPUMPE MIT EINER HALTERUNG**
PISTON PUMP HAVING A HOLDER
POMPE À PISTON ÉQUIPÉE D'UNE MONTURE

(30) Priorität: 17.12.2010 DE 102010063322
(43) Veröffentlichungstag der Anmeldung: 23.10.2013
(73) Patentinhaber: Robert Bosch GmbH, 70442 Stuttgart (DE)
(72) Erfinder: GAERTNER, Oliver, 74232 Abstatt (DE); JAHN, Heiko, 71732 Tamm (DE); ZIMMERMANN, Marc, 87527 Sonthofen (DE); GOSSE, Daniel, 10115 Berlin (DE)
(86) Internationale Anmeldenummer: PCT/EP2011/068639
(87) Internationale Veröffentlichungsnummer: WO 2012/079815

(56) Entgegenhaltungen:
- FR-A1- 2 279 949
- US-A- 5 094 599
- US-A- 5 213 482
- US-A1- 2003 047 993
- US-A1- 2004 166 004
- US-A1- 2008 317 618

## Beschreibung

### Stand der Technik

Die Erfindung betrifft eine Kolbenpumpe, die insbesondere für eine hydraulische Fahrzeugbremsanlage vorgesehen ist, mit einem Zylinderelement, in dem innen ein Druckraum mit einem Auslass ausgebildet ist.

Bekannte Kolbenpumpen weisen ein Zylinderelement auf, in dem ein Druckraum ausgebildet ist. In dem Druckraum ist ein Kolben axial verschiebbar geführt. Der Kolben ist zu einer in axialer Richtung hin- und hergehenden Hubbewegung antreibbar, die in an sich bekannter Weise die Förderung von Fluid bewirkt. Derartigen Kolbenpumpen sind zur Vermeidung von geräuschbildenden Druckpulsationen üblicherweise eine Dämpferkammer und eine Drossel hydraulisch nachgeschaltet, die beide außerhalb des Zylinderelements und oft auch separat von der Kolbenpumpe angeordnet sind.

Eine derartige Kolbenpumpe ist in der DE 103 14 979 B3 offenbart. Die bekannte Kolbenpumpe weist zur Vermeidung von geräuschbildenden Druckpulsationen im angeschlossenen Hydrauliksystem eine dem Druckmittelauslass nachgeschaltete Drossel zur Dämpfung auf. Dabei umfasst die Drossel einen hydraulisch vorgeschalteten Filter. Der Druckmittelauslass wird zumindest abschnittsweise entlang der Mantelfläche einer Laufbuchse geführt und im Bereich dieses Abschnitts sind der Filter und die Drossel einteilig an der Mantelfläche der Laufbuchse ausgebildet.

Aus US 2008 0317618 A1 ist eine Pumpe mit verringerter Druckpulsation einer Fahrzeugbremsanlage bekannt, bei der, einem Auslassventil hydraulisch nachgeschaltet, eine starre Drosselscheibe mit einem darin ausgeformten radialen Drosselkanal vorgesehen ist.

### Offenbarung der Erfindung

Erfindungsgemäß ist eine Kolbenpumpe, insbesondere für ein Hydraulikaggregat einer elektronisch regelbaren Fahrzeugbremsanlage, geschaffen, mit einem Zylinderelement, in dem innen ein Druckraum mit einem Auslass ausgebildet ist. An dem Zylinderelement ist einem Auslassventil der Kolbenpumpe hydraulisch nachgeschaltet ein als Drosselscheibe gestaltetes auslassbegrenzendes Element vor Öffnungen an einem Bauteil, das eine erste Halterung aufweist, derart gehalten, dass es beim Leiten von Fluid durch die Öffnungen von seiner radial ausgerichteten Erstreckung in axialer Richtung ausgelenkt wird. Mit anderen Worten ist am erfindungsgemäßen Zylinderelement ein Bauteil mit einer ersten Halterung für ein auslassbegrenzendes Element angeordnet. Dieses auslassbegrenzende Element ist eine Drossel.

Die Drossel ist als Drosselscheibe ausgebildet. Die erste Halterung, in welche die Drosselscheibe aufgenommen ist, kann dazu eine Auflagefläche aufweisen. Die Drosselscheibe kann damit definiert vorgespannt werden. Die Drosselscheibe kann auch in diese erfindungsgemäße erste Halterung integriert sein. Mit der derartigen ersten Halterung kann ein sehr genauer Öffnungsdruck der Drossel erzielt werden.

Die Drossel selbst ist einem Auslassventil der Kolbenpumpe hydraulisch nachgeschaltet, also in Strömungsrichtung hinter dem Auslassventil der Kolbenpumpe angeordnet. Die Drossel kann in einer Pumpenbohrung oder in einem Auslasskanal im Pumpengehäuse angeordnet sein und wird erfindungsgemäß in der ersten Halterung gehalten. Die Drossel dient der Dämpfung von Druckpulsationen des mit der Kolbenpumpe geförderten Fluids, die die Kolbenpumpe aufgrund ihrer pulsierenden Förderweise bewirkt.

Beim Vorbeileiten am auslassbegrenzenden Element wird dieses von seiner im Wesentlichen radial ausgerichteten Lage bzw. Erstreckung in axialer Richtung ausgelenkt und setzt damit dem Fluid eine drosselnde und/oder dämpfende Wirkung entgegen.

Im Bauteil mit der ersten Halterung für das auslassbegrenzende Element ist bevorzugt zusätzlich eine zweite Halterung für eine Feder angeordnet oder integriert. Diese Feder ist in einer vorteilhaften Ausgestaltung die Auslassventilfeder für einen Auslassventil-Schließkörper. Die Feder liegt auf der zweiten Halterung im Bauteil auf. Dazu kann die zweite Halterung eine Auflagefläche aufweisen. Dabei werden die Bauteile des Auslassventils der Kolbenpumpe, umfassend den Auslassventil-Schließkörper und die Feder, durch die zweite Halterung abgestützt.
In einer alternativen Ausgestaltung ist die Feder in die zweite Halterung integriert. Dabei kann die Feder in die zweite Halterung verstemmt sein. Je nach Ausgestaltung der Feder ist die Halterung unterschiedlich ausgebildet. Ist die Feder eine Schraubenfeder, weist die Halterung eine topfförmige Aufnahme für die Schraubenfeder auf. Ist die Feder eine Blattfeder oder Spiralfeder, ist die Aufnahme flach ausgebildet.
Des Weiteren ist vorzugsweise in das Bauteil eine dritte Halterung für einen hydraulischen Dämpfer angeordnet oder integriert.

Dabei strömt das geförderte Fluid erst durch eine Öffnung des Auslassventils in einen Dämpferraum. Dann folgt die Abströmung über weitere, definierte Öffnungen am erfindungsgemäßen Bauteil an die genannte Drosselscheibe. Diese Öffnungen können in verschiedenen Formen, insbesondere rund oder schlitzförmig, ausgestaltet sein. Die Drosselscheibe biegt sich aufgrund der Anströmung bzw. Druckdifferenz durch und das Fluid kann über die weiteren, definierten Öffnungen abströmen. Dabei ist zugleich das Dämpfungsvolumen gegen den Auslass abgedichtet und somit eine Zwangsdurchströmung der Drossel erzielt.
Der Dämpfer bildet eine hydraulische Kapazität, die ebenfalls zwangsdruchströmt wird und dadurch ein optimiertes Ansprechverhalten zeigt, weil die Drossel einen nachgeschalteten hydraulischen Widerstand für das Fluid bildet.
In dem erfindungsgemäßen Bauteil ist bevorzugt auch ein Einbauraum für einen hydraulischen Speicher vorgesehen. Der Speicher kann einen Teil der genannten hydraulischen Kapazität bilden.

Optional können Abstandshalter in Form von dünnen Füßchen zum Toleranzausgleich des Einbauraums des Bauteils und zur Realisierung der Auslassbohrung hinter der Drossel angeordnet sein.
Das Bauteil ist zusammen mit der mindestens einen Halterung bevorzugt als Spritzgussteil oder als Metall-Drehteil oder als Kaltschlagteil ausgebildet.
Die erfindungsgemäße Ausbildung der Kolbenpumpe mit dem Bauteil mit der ersten Halterung für das auslassbegrenzende Element sowie den weiteren vorteilhaften Halterungen, die in diesem Bauteil angeordnet sind oder in dieses Bauteil integriert sind, bietet den Vorteil, dass in nur einem Bauteil mehrere Funktionen untergebracht sind. Toleranzen zwischen den Funktionen können durch eine entsprechend genaue Ausformung dieses nur einen Bauteils klein gehalten werden.
Das Bauteil dient insbesondere der hydraulischen Verbindung zwischen dem Auslassventil, das die Trennung zum Druckraum darstellt, und einer Auslassbohrung. Diese hydraulische Verbindung zwischen dem Auslassventil und der Auslassbohrung kann dabei ohne nennenswerten Mehraufwand zugleich ein kompressibles Volumen aufweisen.

Die erfindungsgemäße Kolbenpumpe weist einen Pumpenzylinder auf, der insbesondere in einem Hydraulikblock untergebracht ist. Der Pumpenzylinder bildet ein Zylinderelement im Sinne der Erfindung und weist als Druckraum eine zylindrische Ausnehmung auf, in der ein Kolben axial verschiebbar geführt ist.
Die erfindungsgemäße Kolbenpumpe ist insbesondere als Pumpe in einer Bremsanlage eines Fahrzeugs vorgesehen und wird beim Steuern des Drucks in Radbremszylindern verwendet. Solche Bremsanlagen umfassen in allgemein bekannter Weise eine Radschlupfregelung (ABS bzw. ASR), eine Antriebsschlupfregelung (TCS), eine als Lenkhilfe dienende Bremsanlage (FDR), eine elektrohydraulische Bremsanlage (EHB) und/oder ein elektronisches Stabilisierungsprogramm (ESP). In solchen Bremsanlagen dient die Pumpe zum Rückfördern von Bremsflüssigkeit aus Radbremszylindern in einen Hauptbremszylinder und/oder zum Fördern von Bremsflüssigkeit aus einem Vorratsbehälter in Radbremszylinder.

Nachfolgend werden Ausführungsbeispiele der erfindungsgemäßen Lösung anhand der beigefügten schematischen Zeichnungen näher erläutert. Es zeigt:
- Fig. 1: einen Längsschnitt einer Kolbenpumpe mit einem ersten Ausführungsbeispiels eines erfindungsgemäßen Bauteils mit einer Aufnahme für eine Schraubenfeder,
- Fig. 2: einen Längsschnitt einer Kolbenpumpe mit einem zweiten Ausführungsbeispiels eines erfindungsgemäßen Bauteils mit einer Aufnahme für eine Spiralfeder,
- Fig. 3: eine schräge Draufsicht des Bauteils gemäß Fig. 1,
- Fig. 4: den Schnitt IV - IV in Fig. 3,
- Fig. 5: eine schräge Unteransicht des Bauteils gemäß Fig. 1,
- Fig. 6: eine Ansicht gemäß Fig. 5 mit auslassbegrenzendem Element,
- Fig. 7: eine schräge Draufsicht einer Variante des Bauteils gemäß Fig. 1 und
- Fig. 8: den Schnitt VIII - VIII in Fig. 7.

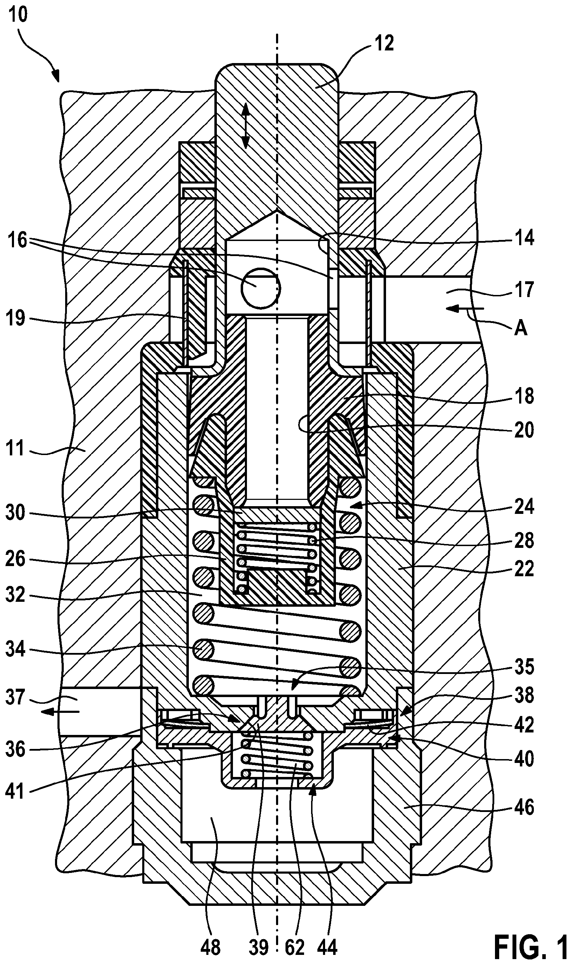

In Fig. 1 ist die Kolbenpumpe 10 dargestellt. Die Kolbenpumpe 10 umfasst einen Kolben 12, der seiner in Axialrichtung hin- und herbewegbar ist. Dies geschieht mittels eines nicht dargestellten Exzenterantriebs. Der Kolben 12 weist eine Axialbohrung 14 und mehrere Radialbohrungen 16 auf. Am Kolben 12 ist ein Führungselement 18 mit einer Durchgangsöffnung 20 angeordnet, das den Kolben 12 in einem Zylinderelement 22 führt. Das Zylinderelement 22 ist im Wesentlichen rohrförmig in einem Pumpengehäuse 11 ausgebildet. Am vom Kolben 12 abgewandten Ende des Führungselements 18 ist ein Einlassventil 24 angeordnet. Das Einlassventil 24 umfasst einen Käfig 26, eine Rückstellfeder 28 und eine Platte 30 als Schließkörper. Der Käfig 26 ist am Führungselement 16 fixiert. Die Platte 30 verschließt und gibt die Durchgangsöffnung 20 im Führungselement 18 frei. Das Einlassventil 24 ist damit innerhalb des Zylinderelements 22 in einem Druckraum 32 angeordnet, in dem ferner auch eine Kolbenrückstellfeder 34 angeordnet ist.

Die Kolbenpumpe 10 umfasst darüber hinaus ein Auslassventil 36, das an der vom Kolben 12 abgewandten Stirnfläche des Zylinderelements 22 angeordnet ist. Das Auslassventil 36 umfasst einen Ventilkörper 39, der von einer Ventilfeder 62 in Gestalt einer Spiralfeder gegen einen in dieser Stirnfläche ausgebildeten Ventilsitz 41 gedrängt ist.

An der vom Druckraum 32 abgewandten Seite der Stirnfläche ist an dem Zylinderelement 22 anliegend ein Bauteil 38 mit einer ersten Halterung 40 in Form einer durchlöcherten Ringscheibe für mindestens ein auslassbegrenzendes Element 42 angeordnet. Das auslassbegrenzende Element 42 ist als eine Drosselscheibe gestaltet.

Zusätzlich ist an dem Bauteil 38 eine zweite Halterung 44 zum Abstützen der Ventilfeder 62 des Auslassventils 36 ausgebildet bzw. integriert. Die zweite Halterung 44 umfasst eine ringförmige Abstütz- bzw. Auflagefläche für die Ventilfeder 62. Optional kann die Ventilfeder 62 auch in die zweite Halterung 44 verstemmt sein. Die Halterung 44 ist an die Form der zu verwendenden Ventilfeder 62 einfach anpassbar. Für die vorliegend als Schraubenfeder gestaltete Ventilfeder 62 ist die Halterung 44 topfförmig gestaltet.

In Axialrichtung hinter dem Bauteil 38 ist in einem an das Zylinderelement 22 anschließenden kappenförmigen Verschlusselement 46 ein zusätzlicher bzw. weiterer Raum 48 für den Einbau eines nicht weiter veranschaulichten hydraulischen Speichers zur Verfügung gestellt.

Das Bauteil 38 ist als Spritzgussteil, als Metall-Drehteil oder als Kaltschlagteil ausgebildet.

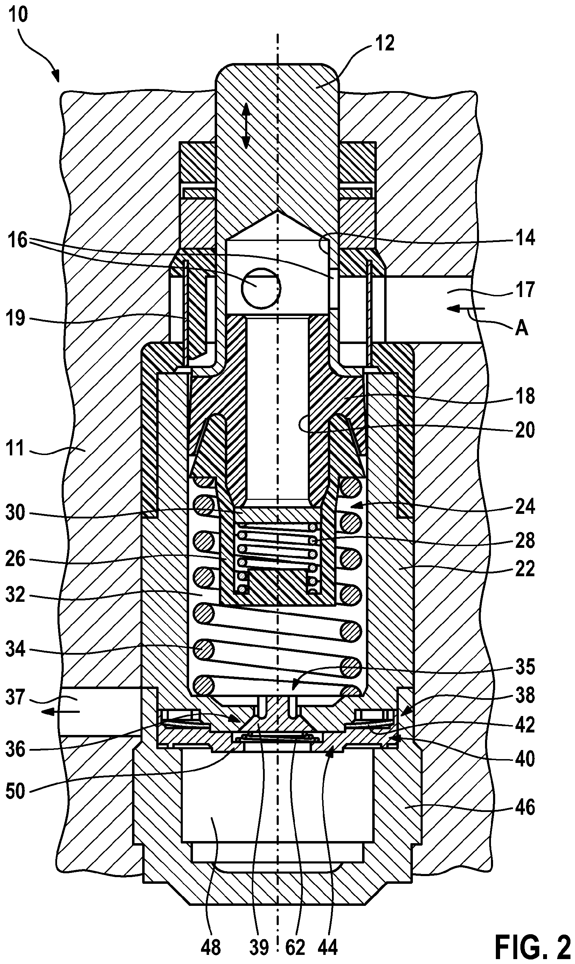

In Fig. 2 ist die Kolbenpumpe 10 gemäß Fig. 1 in einer anderen Variante dargestellt.

Die zweite Halterung 44 ist bei dieser Variante als eine vergleichsweise flache, im Wesentlichen scheibenförmige Aufnahme für eine als Blattfeder oder Spiralfeder ausgebildete Ventilfeder 62 gestaltet.

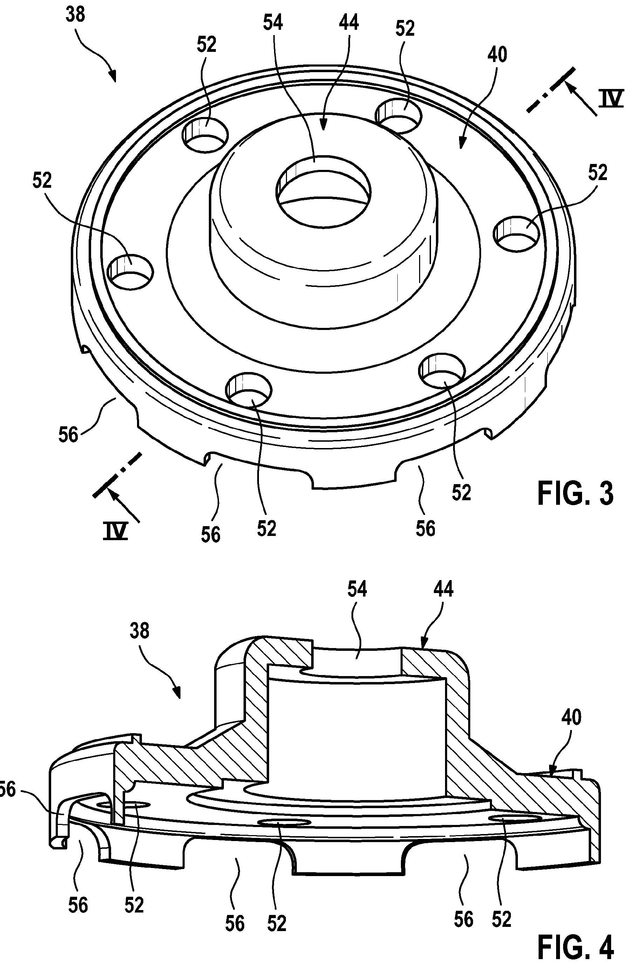

In Fig. 3 bis 5 ist das Bauteil 38 mit seiner Halterung 40 in Form einer topfförmigen Aufnahme und seiner Halterung 44 in Gestalt einer am äußeren Rand abgewinkelten Ringscheibe zu sehen.

Am Topfboden der Halterung 40 ist eine zentrale Öffnung 54 zum Durchleiten des vom Ventilkörper 39 kommenden Fluids an die Rückseite des Bauteils 38 vorgesehen. Auf der Ringscheibe der Halterung 44 sind auf einem Kreis in gleichmäßigen Abständen verteilt Öffnungen 52 angeordnet, durch die das Fluid von der Rückseite des Bauteils 38 außen wieder an dessen Vorderseite strömen kann. Dabei muss das Fluid das sich vor diesen Öffnungen befindende auslassbegrenzende Element in Gestalt einer Drosselscheibe schwenken, um an der Vorderseite durch die Öffnungen 52 austreten zu können. Vorliegend sind sechs derartige Öffnungen 52 vorgesehen.

An dem abgewinkelten Rand der Ringscheibe der Halterung 44 sind ebenfalls in gleichmäßigen Abständen verteilt Abströmöffnungen 56 in Form von Vertiefungen bzw. Aussparungen des Randes ausgebildet. Durch dies Abströmöffnungen 56 kann Fluid in Strömungsrichtung hinter dem auslassbegrenzenden Element 42 in eine im Wesentlichen radiale Auslassöffnung 37, welche im Pumpengehäuse 11 ausgebildet ist, ausgeleitet werden.

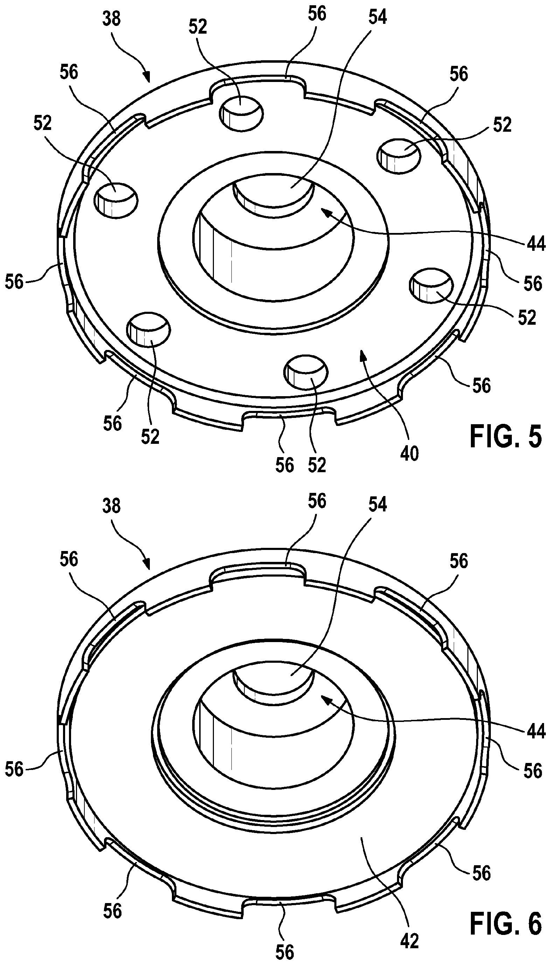

In Fig. 6 ist an dem Bauteil 38 zusätzlich das von der Halterung 44 eingefasste auslassbegrenzende Element 44 in Gestalt einer auslenkbaren Drosselscheibe dargestellt.

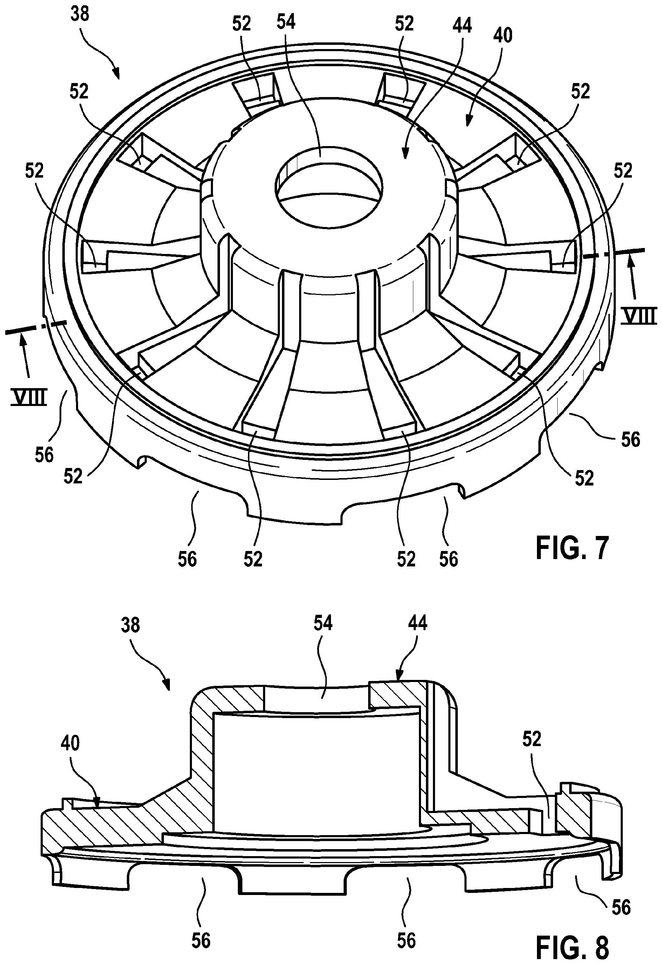

Die Fig. 7 und 8 zeigen eine Variante des Bauteils 38, bei der die Öffnungen 52 als radiale gerichtete Schlitze gestaltet sind. Die Schlitze erstrecken sich dabei als Vertiefung auch durch den topfförmigen Ansatz für die Halterung 40 sowie durch die Ringscheibe für die Halterung 44.

Die Funktion der derartigen Kolbenpumpe 10 ist wie folgt:
In einer Ansaugphase der Kolbenpumpe 10 ist das Auslassventil 36 geschlossen und das Einlassventil 24 geöffnet. Dadurch wird Fluid durch die Fluidzuleitung 17 in Richtung durch ein Filterelement 19, die Radialbohrungen 16, die Axialbohrung 14 und die Längsbohrung 20 des Führungselements 18 zum Einlassventil 24 geführt. Durch das geöffnete Einlassventil 24 wird das Fluid in den Druckraum 32 angesaugt. Im unteren Totpunkt des Kolbens 12 ändert sich die Bewegungsrichtung des Kolbens 12, wodurch sich das Einlassventil 24 schließt. Der Kolben 12 bewegt sich nun in Richtung des Auslassventils 36. Dabei erfolgt ein Druckaufbau im Druckraum 32, bis der Druck darin größer als die Rückstellkraft der Ventilfeder 62 des Auslassventils 36 ist.

Auf der dem Druckraum 32 abgewandten Seite des Auslassventils 36 ist das auslassbegrenzende Element 42 als Drosselscheibe an seiner Halterung 40 im Bauteil 38 angeordnet. Dabei weist das Bauteil 38 innen am abgewinkelten Rand der Halterung 40 einen Absatz auf, an dem die Drosselscheibe mit ihrem äußeren Randbereich anliegt und dadurch in axialer Richtung vorgespannt wird. Die derartige Vorspannung führt zu einem definierten Öffnungsdruck für die Drosselscheibe vor den Öffnungen 52.

Dazu ist das Bauteil 38 mit dem auslassbegrenzenden Element 42 zwischen dem Zylinderelement 22 und dem Verschlusselement 46 in dem Pumpengehäuse 11 gehaltert.

Das Fluid strömt bei geöffnetem Auslassventil 36 durch das erfindungsgemäße Bauteil 38 durch dessen zentrale Öffnung 54, dann am auslassbegrenzenden Element 42 vorbei zurück durch die Öffnungen 52, und dann weiter in die als Druckleitung wirkende Auslassöffnung 37. Beim Vorbeileiten am auslassbegrenzenden Element 42 wird dieses von seiner im Wesentlichen radial ausgerichteten Lage bzw. Erstreckung in axialer Richtung ausgelenkt und setzt damit dem Fluid eine drosselnde und/oder dämpfende Wirkung entgegen.

## Patentansprüche

1. Kolbenpumpe (10) insbesondere für ein Hydraulikaggregat einer elektronisch regelbaren Fahrzeugbremsanlage, mit einem Zylinderelement (22), in dem innen ein Druckraum (32) mit einem Auslass ausgebildet ist, und mit einem Bauteil (38)
**dadurch gekennzeichnet, dass** einem Auslassventil (36) der Kolbenpumpe hydraulisch nachgeschaltet außen am Zylinderelement ein als Drosselscheibe gestaltetes auslassbegrenzendes Element (42) vor Öffnungen (52) an dem Bauteil (38) mit einer ersten Halterung (40) derart gehalten ist, dass es beim Leiten von Fluid durch die Öffnungen (52) von seiner radial ausgerichteten Erstreckung in axialer Richtung ausgelenkt wird.

2. Kolbenpumpe nach Anspruch 1,
**dadurch gekennzeichnet, dass** das Bauteil (38) an dem Zylinderelement (22) anliegend positioniert ist.

3. Kolbenpumpe nach Anspruch 1 oder 2,
**dadurch gekennzeichnet, dass** das Bauteil (38) im Wesentlichen plattenförmig ausgebildet ist.

4. Kolbenpumpe nach einem der Ansprüche 1 bis 3,
**dadurch gekennzeichnet, dass** das Bauteil (38) eine zweite Halterung (44) für eine Ventilfeder (62) eines Auslassventils (36) aufweist.

5. Kolbenpumpe (10) nach Anspruch 4,
**dadurch gekennzeichnet dass** die Ventilfeder (62) als Blattfeder oder Spiralfeder ausgestaltet ist.

6. Kolbenpumpe nach einem der vorhergehenden Ansprüche,
**dadurch gekennzeichnet, dass** die erste Halterung (40) des Bauteils (38) einen Absatz zur Vorspannung des auslassbegrenzenden Elements (42) aufweist.

7. Kolbenpumpe nach einem der vorhergehenden Ansprüche,
**dadurch gekennzeichnet, dass** das Bauteil (38) Öffnungen (52) aufweist, die insbesondere in der ersten Halterung (40) verteilt angeordnet sind.

8. Kolbenpumpe nach einem der vorhergehenden Ansprüche,
**dadurch gekennzeichnet, dass** das Bauteil (38) von einem Verschlusselement (46) gehalten ist, in dem einen Raum (48) für einen Dämpfer ausgebildet ist.

9. Kolbenpumpe nach einem der vorhergehenden Ansprüche,
**dadurch gekennzeichnet, dass** das Bauteil (38) als Spritzgussteil, als Metall-Drehteil oder als Kaltschlagteil ausgebildet ist.

## Claims

1. Piston pump (10), in particular for a hydraulic assembly of an electronically controlled vehicle brake system, having a cylinder element (22), inside which a delivery chamber (32) with an outlet is formed, and having a component (38), **characterized in that**, hydraulically downstream of an outlet valve (36) of the piston pump, on the cylinder element, an outlet-restricting element (42) designed as restrictor plate is held in front of openings (52) on the component (38) by means of a first holder (40) such that, when fluid is conducted through the openings (52), said element is deflected in an axial direction from its radially oriented extent.

2. Piston pump according to Claim 1, **characterized in that** the component (38) is positioned bearing against the cylinder element (22).

3. Piston pump according to Claim 1 or 2, **characterized in that** the component (38) is of substantially plate-shaped design.

4. Piston pump according to one of Claims 1 to 3, **characterized in that** the component (38) comprises a second mount (44) for a valve spring (62) of an outlet valve (36).

5. Piston pump (10) according to Claim 4, **characterized in that** the valve spring (62) is embodied as a leaf spring or spiral spring.

6. Piston pump according to one of the preceding claims, **characterized in that** the first mount (40) of the component (38) comprises a step for pre-tensioning the outlet-restricting element (42).

7. Piston pump according to one of the preceding claims, **characterized in that** the component (38) comprises openings (52), which are spaced, in particular, in the first mount (40).

8. Piston pump according to one of the preceding claims, **characterized in that** the component (38) is held by a closure element (46), in which a space (48) is formed for a damper.

9. Piston pump according to one of the preceding claims, **characterized in that** the component (38) is formed as an injection-molded part, a turned metal part or as a cold-formed part.

## Revendications

1. Pompe (10) à piston, en particulier pour système hydraulique d'une installation de freinage de véhicule régulée électroniquement, la pompe présentant un élément de cylindre (22) dans lequel est formé un espace (32) sous pression doté d'un échappement et un composant (38), **caractérisée en ce que** un élément (42) qui limite l'échappement, configuré comme disque d'étranglement, placé hydrauliquement en aval d'une soupape d'échappement (36) de la pompe à piston, à l'extérieur de l'élément de cylindre, est maintenu en avant d'ouvertures (52) par un premier support (40) sur le composant (38) de telle sorte qu'il est dévié dans la direction axiale lorsqu'il guide du fluide dans les ouvertures (52) par son extension orientée radialement.

2. Pompe à piston selon la revendication 1, **caractérisée en ce que** le composant (38) est placé sur l'élément de cylindre (22).

3. Pompe à piston selon les revendications 1 ou 2, **caractérisée en ce que** le composant (38) est configuré essentiellement en forme de plaque.

4. Pompe à piston selon l'une des revendications 1 à 3, **caractérisée en ce que** le composant (38) présente un deuxième support (44) pour un ressort (62) d'une soupape d'échappement (36).

5. Pompe (10) à piston selon la revendication 4, **caractérisée en ce que** le ressort (62) est configuré comme ressort à lame ou ressort en spirale.

6. Pompe à piston selon l'une des revendications précédentes, **caractérisée en ce que** le premier support (40) du composant (38) présente un décalage de précontrainte de l'élément (42) qui limite l'échappement.

7. Pompe à piston selon l'une des revendications précédentes, **caractérisée en ce que** le composant (38) présente des ouvertures (52) en particulier réparties dans le premier support (40).

8. Pompe à piston selon l'une des revendications précédentes, **caractérisée en ce que** le composant (38) est maintenu par un élément de fermeture (46) dans lequel est formé un espace (48) pour un amortisseur.

9. Pompe à piston selon l'une des revendications précédentes, **caractérisée en ce que** le composant (38) est configuré comme pièce moulée par injection, pièce métallique tournée ou pièce forgée à froid.
